(19) Europäisches Patentamt

European Patent Office

Office européen des brevets

(11) **EP 2 605 400 B1**

(12) **FASCICULE DE BREVET EUROPEEN**

(45) Date de publication et mention
de la délivrance du brevet:
**24.04.2019 Bulletin 2019/17**

(51) Int Cl.:
***H02P 27/08*** *(2006.01)*        ***H02P 6/10*** *(2006.01)*

(21) Numéro de dépôt: **12197089.1**

(22) Date de dépôt: **13.12.2012**

(54) **Procédé de commande d'un onduleur pour l'alimentation électrique d'un moteur, et module de commande associé**

Steuerverfahren eines Wechselrichters für die Stromversorgung eines Motors, und entsprechendes Steuermodul

Method for controlling an inverter for supplying electricity to a motor, and related control module

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.12.2011 FR 1161541**

(43) Date de publication de la demande:
**19.06.2013 Bulletin 2013/25**

(73) Titulaire: **Safran Ventilation Systems
31700 Blagnac (FR)**

(72) Inventeurs:
• **Boulet, Guillaume
32600 L'ISLE JOURDAIN (FR)**
• **Bourse, Wenceslas
31200 TOULOUSE (FR)**
• **Rollin, Pascal
31700 DAUX (FR)**
• **Toutain, Pascal Jacques Frédéric Guy
31700 BLAGNAC (FR)**

(74) Mandataire: **Lavoix
2, place d'Estienne d'Orves
75441 Paris Cedex 09 (FR)**

(56) Documents cités:
**US-A1- 2003 062 863     US-A1- 2008 252 239
US-A1- 2010 117 573**

## Description

La présente invention concerne un procédé de commande d'un onduleur propre à alimenter électriquement un moteur, l'onduleur comprenant une pluralité de commutateurs commandés pour la régulation de l'alimentation électrique du moteur, le moteur comprenant un rotor et un stator adaptés pour être en rotation relative l'un par rapport à l'autre.

Ce procédé est en particulier destiné à être mis en oeuvre pour piloter l'alimentation électrique d'un moteur d'un ventilateur à bord d'un aéronef.

De nos jours, les aéronefs, et en particulier les avions commerciaux, comprennent un grand nombre d'équipements électriques destinés à l'assistance au pilotage et au confort des passagers. Ces équipements incluent notamment des ventilateurs destinés à des systèmes de refroidissement et de ventilation avioniques.

Les aéronefs comprennent un réseau électrique pour l'alimentation en tension de ces différents équipements. La tension électrique est fournie au réseau au moyen de générateurs de tension installés dans les moteurs (à propulsion ou à réaction) de l'aéronef. La tension électrique transportée par le réseau est généralement une tension alternative, des redresseurs étant prévus au niveau des équipements nécessitant une tension d'alimentation continue.

Les ventilateurs comprennent ainsi le plus souvent un redresseur en entrée pour obtenir une tension d'entrée continue, le redresseur étant suivi d'un onduleur commandé par un module de commande pour réguler l'alimentation en tension alternative du moteur du ventilateur, de façon à pouvoir piloter la vitesse de rotation des pales du ventilateur.

Cependant, il a été observé que les ventilateurs connus généraient des harmoniques de tension parasites, à des fréquences différentes de celle générée par les générateurs de tension, ces fréquences parasites ayant des intensités trop importantes pour être compatibles avec le réseau électrique de l'aéronef. En particulier, ces harmoniques de tension parasites ont les fréquences suivantes :

$$f_1 = \left| F \pm (F_{PWM} - K_1 \times 6 \times \frac{N \times \Omega}{60}) \right|$$

pour une première de ces fréquences parasites, où F est la fréquence de tension générée par les générateurs de tension de l'aéronef, $F_{PWM}$ est la fréquence porteuse de l'onduleur, $\Omega$ est la vitesse de rotation du moteur (exprimée en tours par minute), N est le nombre de paires de pôles du rotor et $K_1$ est le plus petit entier tel que l'expression $(F_{PWM} - K_1 \times 6 \times \frac{N \times \Omega}{60})$ est positive, et

$$f_2 = \left| F \pm (F_{PWM} - K_2 \times 6 \times \frac{N \times \Omega}{60}) \right|$$

pour une deuxième de ces fréquences parasites, où F est la fréquence de tension générée par les générateurs de tension de l'aéronef, $F_{PWM}$ est la fréquence porteuse de l'onduleur, $\Omega$ est la vitesse de rotation du moteur (exprimée en tours par minute), N est le nombre de paires de pôles du rotor et $K_2$ est le plus petit entier tel que

l'expression $(F_{PWM} - K_2 \times 6 \times \frac{N \times \Omega}{60})$ est négative.

Par ailleurs, il a également été observé que, pour certaines vitesses de rotation des pales, les ventilateurs connus engendraient des harmoniques de tension à des fréquences susceptibles de perturber le fonctionnement des générateurs de tension.

Pour corriger cela, il a été proposé de programmer les ventilateurs de façon à ce que ces derniers ne puissent atteindre des points de fonctionnement dans lesquels ils auraient été susceptibles de produire des harmoniques de courant à des fréquences indésirables. Cependant, une telle solution présente de nombreux inconvénients. En effet :

- il est nécessaire de connaître la fréquence de fonctionnement du réseau électrique de l'aéronef préalablement à la programmation du ventilateur,
- il existe un risque que les points de fonctionnement interdits soient nécessaires à un fonctionnement optimal du système de refroidissement ou de ventilation, et
- le ventilateur continue de produire des harmoniques de courant parasites ayant des intensités trop importantes.

Le document US 2003/062863 A1 (HUANG BIING-HUANG [TW] ET AL) est de l'art antérieur à la présente demande.

Un objectif de l'invention est donc de proposer un procédé et un module de commande d'un onduleur, propre à alimenter électriquement un moteur à partir d'un réseau électrique d'alimentation, permettant de réduire les harmoniques de tension engendrées par le moteur sur le réseau d'alimentation. Un autre objectif est d'avoir une plage continue de vitesses de rotation du rotor autorisées.

A cet effet, l'invention a pour objet un procédé de commande selon la revendication 1.

Dans des modes de réalisation préférés de l'invention, le procédé comprend également l'une ou plusieurs des caractéristiques des revendications 2 à 4.

L'invention a également pour objet un ventilateur d'aéronef selon la revendication 5.

Dans des modes de réalisation préférés de l'invention, le ventilateur d'aéronef présente également l'une ou plusieurs des caractéristiques des revendications 6 à 8.

Enfin, l'invention a également pour objet un aéronef selon la revendication 9.

D'autres caractéristiques et avantages de l'invention apparaîtront à la lecture de la description qui va suivre, donnée uniquement à titre d'exemple et faite en se référant aux dessins annexés, sur lesquels :

- la Figure 1 est une vue schématique du circuit électrique d'un ventilateur d'aéronef comprenant un système d'alimentation selon l'invention,
- la Figure 2 est un tableau renseignant le signal reçu par chaque commutateur d'un onduleur du système d'alimentation en fonction d'un angle relatif entre le rotor et le stator du moteur,
- la Figure 3 est une vue schématique d'une partie d'un module de commande du système d'alimentation du ventilateur de la Figure 1, et
- la Figure 4 est un chronogramme de divers signaux du module de commande.

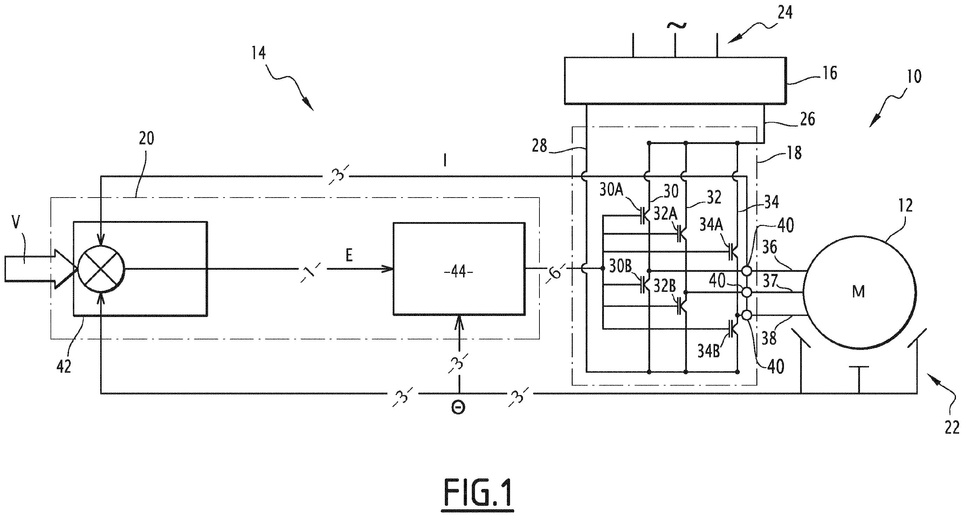

Comme visible sur la Figure 1, le ventilateur 10 comprend un moteur 12 électrique et un système 14 d'alimentation électrique du moteur 12.

De façon connue, le moteur 12 comprend un rotor (non représenté) et un stator (non représenté) montés rotatifs l'un par rapport à l'autre. Le rotor porte des aimants permanents, ou un bobinage. Des bobinages (non représentés), portés par le stator, sont adaptés pour générer un champ magnétique sous l'effet duquel le rotor est entraîné en rotation relativement au stator.

Le rotor est sensiblement cylindrique et le stator s'étend sensiblement coaxialement autour ou à l'intérieur du rotor. Le rotor est adapté pour pivoter autour de son axe. Un angle est défini entre le stator et le rotor par rapport à une position de référence du rotor relativement au stator.

Le système d'alimentation 14 comprend un redresseur 16, un onduleur 18 propre à alimenter électriquement le moteur 12, un module 20 de commande de l'onduleur 18, et un capteur 22 pour mesurer l'angle Θ du rotor du moteur 12 relativement au stator.

Le capteur 22 est typiquement un capteur à effet Hall et est adapté pour déduire un angle mesuré Θ du rotor en fonction de l'orientation du champ magnétique vue par le capteur 22. En particulier, le moteur 12 est découpé en secteurs angulaires (non représentés), et le capteur 22 est adapté pour identifier dans quel secteur angulaire se trouve l'angle formé entre le rotor et le stator. Le nombre de secteurs angulaires est égal à six.

Le redresseur 16 est intercalé entre un réseau électrique 24, typiquement un réseau électrique d'aéronef, et l'onduleur 18. Il est adapté pour convertir la tension alternative convoyée par le réseau électrique 24 en une tension sensiblement continue d'alimentation de l'onduleur 18. Le redresseur 16 est raccordé électriquement à l'onduleur 18 via une ligne positive 26, à un potentiel positif sensiblement constant, et via une ligne négative 28, à un potentiel négatif sensiblement constant.

L'onduleur 18 comprend comporte trois branches de commutation 30, 32, 34 montées en parallèle entre les lignes positive 26 et négative 28. Chaque branche, respectivement 30, 32, 34, comporte deux commutateurs commandés, respectivement 30A, 30B, 32A, 32B, 34A, 34B, montés en série et entre lesquels est raccordée une ligne, de sortie, respectivement 36, 37, 38, pour l'alimentation du moteur 12. En particulier, les lignes de sortie 36, 37, 38 sont adaptées pour alimenter les bobinages du stator en courant électrique.

Dans l'exemple de réalisation de la Figure 1, chaque ligne de sortie 36, 37, 38 correspond à une phase de l'alimentation triphasée du moteur 12.

Pour chaque branche, respectivement 30, 32, 34, un premier commutateur, respectivement 30A, 32A, 34A, est disposé entre la ligne positive 26 et la ligne de sortie, respectivement 36, 37, 38, associée, et un deuxième commutateur, respectivement 30B, 32B, 34B, est disposé entre la ligne négative 28 et la ligne de sortie, respectivement 36, 37, 38, associée. Chaque commutateur 30A, 30B, 32A, 32B, 34A, 34B est apte à basculer entre une position fermée, dans laquelle il relie électriquement la ligne positive 26 ou négative 28 à la ligne de sortie 36, 37, 38 associée, et une position ouverte, dans laquelle il isole électriquement lesdites lignes.

Chaque commutateur 30A, 30B, 32A, 32B, 34A, 34B est de préférence un transistor, typiquement un transistor bipolaire à grille isolée (mieux connu sous l'acronyme anglais IGBT pour « Insulated Gate Bipolar Transistor »).

En option, une diode est associée à chaque commutateur 30A, 30B, 32A, 32B, 34A, 34B, en antiparallèle.

L'onduleur 18 comprend également des capteurs de courant 40 pour mesurer un courant I circulant dans chaque ligne de sortie 36, 37, 38. En variante, l'onduleur 18 comprend un unique capteur de courant 40.

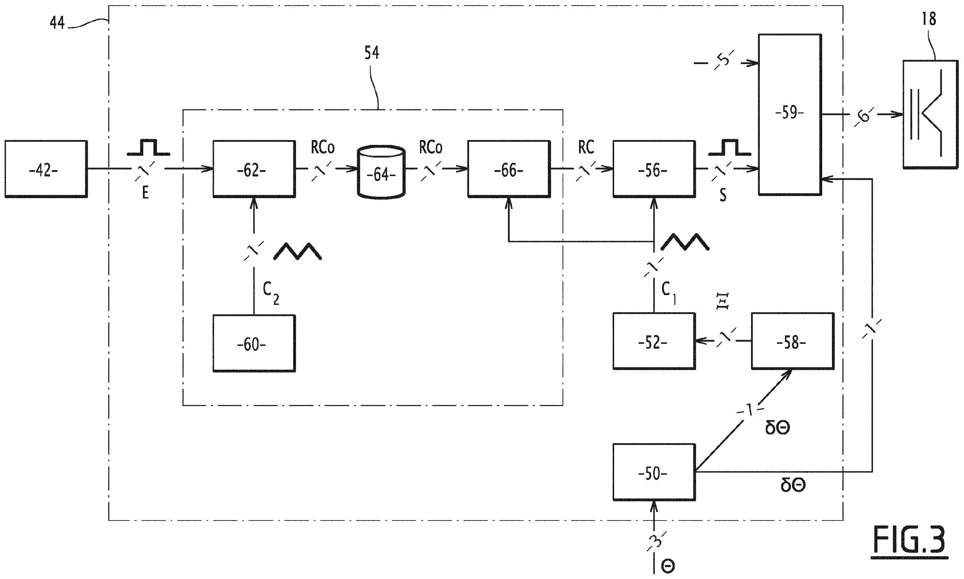

Le module de commande 20 est adapté pour générer un signal numérique cyclique S (Figure 3) de commande des commutateurs 30A, 30B, 32A, 32B, 34A, 34B, fonction de l'angle mesuré Θ du rotor relativement au stator et du courant mesuré I circulant dans chaque ligne de sortie 36, 37, 38.

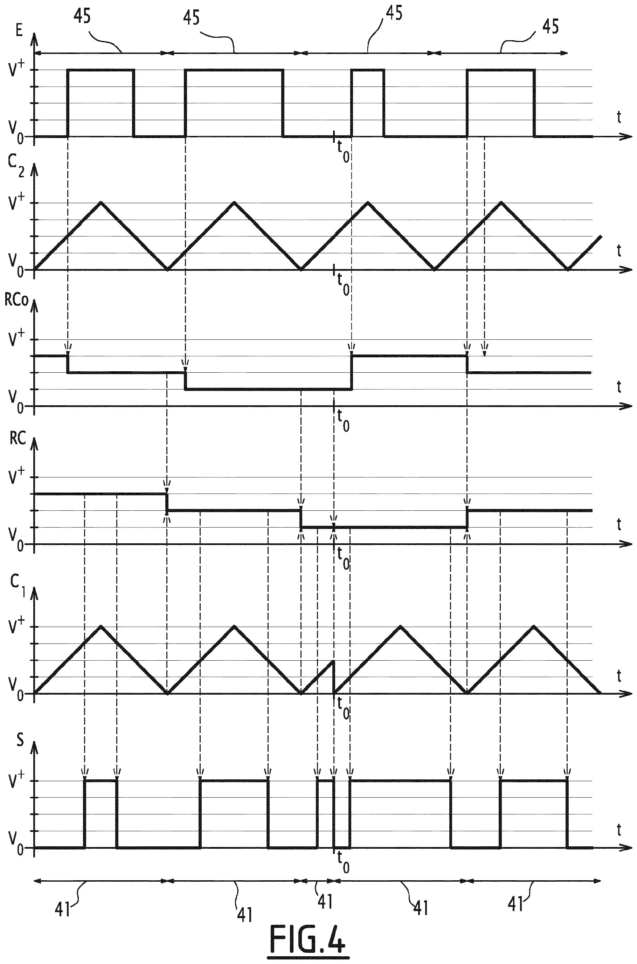

Par « signal numérique cyclique » on comprend un signal adapté pour prendre exclusivement deux valeurs en tension $V_0$, $V^+$ (Figure 4), la première valeur de tension $V_0$ correspondant à un « 0 » logique et la seconde valeur de tension $V^+$ correspondant à un « 1 » logique, la première valeur étant inférieure à la deuxième valeur. Le signal est ainsi codé sur un seul bit. Le signal est de plus découpé en cycles réguliers, prend la valeur logique « 0 » au début et à la fin de chaque cycle, et change de valeur seulement deux fois au cours de chaque cycle. En particulier, le signal est un signal en créneaux, chaque créneau étant centré sur le milieu d'un cycle du signal.

Le signal numérique cyclique de commande S a un rapport cyclique variable, c'est-à-dire que le rapport entre la durée pendant laquelle le signal S prend la valeur logique « 1 » et la durée pendant laquelle le signal S prend la valeur logique « 0 » au cours de chaque cycle 41 du signal S varie d'un cycle 41 à l'autre, comme représenté sur la Figure 4. Le signal numérique cyclique de commande S est de préférence de type modulation à largeur d'impulsion (MLI).

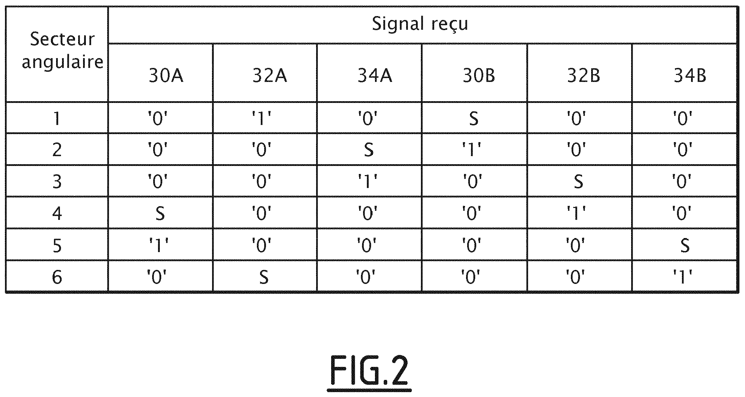

De retour à la Figure 1, le module de commande 20 est également adapté pour transmettre ledit signal numérique cyclique de commande S sélectivement à chacun des commutateurs 30A, 30B, 32A, 32B, 34A, 34B. En d'autres termes, le module de commande 20 est adapté pour transmettre le signal numérique cyclique de commande S à tous les commutateurs 30A, 30B, 32A, 32B, 34A, 34B, mais de façon à ce qu'un seul commutateur 30A, 30B, 32A, 32B, 34A, 34B reçoive le signal numérique cyclique de commande S à la fois. Le module de commande 20 est adapté pour transmettre cinq signaux numériques de commande constants aux autres commutateurs 30A, 30B, 32A, 32B, 34A, 34B, quatre de ces signaux numériques constants prenant la valeur logique « 0 » et un desdits signaux numériques de commande constants prenant la valeur logique « 1 », comme représenté sur le tableau de la Figure 2.

Chaque commutateur 30A, 30B, 32A, 32B, 34A, 34B est adapté pour être en position fermée lorsque le signal de commande qui lui est appliqué prend la valeur logique « 1 », et pour être en position ouverte lorsque le signal de commande qui lui est appliqué prend la valeur logique « 0 ».

En outre, comme visible sur la Figure 2, le module de commande 20 est adapté pour changer le commutateur 30A, 30B, 32A, 32B, 34A, 34B auquel est transmis le signal numérique cyclique de commande S à chaque détection d'un changement de l'angle $\Theta$ du rotor du moteur 12 relativement au stator.

Enfin, le module de commande 20 est adapté pour synchroniser temporellement le signal numérique cyclique de commande S sur un instant $t_0$ (Figure 4) de détection d'un changement de l'angle $\Theta$ du rotor relativement au stator, par exemple d'un changement de secteur angulaire de l'angle $\Theta$, à chaque détection d'un tel changement. En d'autres termes, le module de commande 20 est adapté pour faire débuter un nouveau cycle du signal numérique cyclique de commande S à l'instant $t_0$.

A cet effet, comme représenté sur la Figure 1, le module de commande 20 comprend un module de régulation 42 et un module de synchronisation 44, connecté en sortie du module de régulation 42.

Le module de régulation 42 est adapté pour générer un signal numérique cyclique intermédiaire E en fonction des courants I mesurés dans les lignes de sortie 36, 37, 38, d'une vitesse angulaire mesurée du rotor, déduite de l'angle $\Theta$, et d'une consigne de vitesse V. En particulier, le module de régulation est adapté pour déduire le signal numérique cyclique intermédiaire E de la consigne de vitesse V, et pour ajuster ledit signal numérique cyclique intermédiaire E en fonction de l'écart des courants mesurés I et de la vitesse angulaire mesurée par rapport, respectivement, à une consigne de courant, déduite de la consigne de vitesse V, et à la consigne de vitesse V.

La durée de chaque cycle 45 du signal E est égale à la durée de chaque cycle 41 du signal S.

Le signal numérique cyclique intermédiaire E, visible sur la Figure 4, a un rapport cyclique variable, et est de préférence de type MLI. On notera que le rapport cyclique du signal E est fonction de la vitesse angulaire mesurée, des courants mesurés I, et de la consigne de vitesse V.

Le module de synchronisation 44 est propre à délivrer les signaux de commande respectifs à chaque commutateur 30A, 30B, 32A, 32B, 34A, 34B.

En référence à la Figure 3, le module de synchronisation 44 comprend des moyens 50 de détection d'un changement de l'angle $\Theta$, un premier compteur 52, pour générer un premier compte temporel $C_1$ périodique, des moyens 54 de mise à disposition d'une consigne de rapport cyclique RC en fonction du signal numérique cyclique intermédiaire E reçu du module de régulation 42, des moyens 56 de génération du signal numérique cyclique de commande S à partir du premier compte temporel $C_1$ et de la consigne de rapport cyclique RC, et des moyens 58 de réinitialisation du premier compteur 52. Le module de commande 20 comprend également un répartiteur de signal 59 pour sélectionner le commutateur 30A, 30B, 32A, 32B, 34A, 34B de l'onduleur 18 auquel est transmis le signal numérique cyclique de commande S.

Les moyens de détection 50 sont adaptés pour déduire de l'angle $\Theta$ mesuré par le capteur 22 chaque changement dudit angle $\Theta$, par exemple chaque changement de secteur angulaire dudit angle $\Theta$, et pour émettre un signal $\delta\Theta$ de détection de changement d'angle, à destination des moyens de réinitialisation 58, à chaque instant $t_0$ de détection d'un changement de l'angle mesuré $\Theta$.

Le premier compteur 52 est adapté pour générer le premier compte temporel $C_1$. Le premier compte temporel $C_1$ est un signal en dents de scie prenant des valeurs en tension comprises entre la première valeur de tension $V_0$ et la deuxième valeur de tension $V^+$. Le premier compte temporel $C_1$ prend en particulier la première valeur de tension $V_0$ au début et à la fin de chaque période, prend la deuxième valeur de tension $V^+$ au milieu de chaque période, et croît et décroît sensiblement linéairement entre ces deux extrêmes.

Le premier compte temporel $C_1$ est synchronisé temporellement avec le signal cyclique de commande S, c'est-à-dire que chaque période du premier compte temporel $C_1$ correspond à un cycle 41 du signal S. En d'autres termes, chaque période du premier compte temporel $C_1$ a la même durée et débute en même temps que chaque cycle 41 du signal S, comme représenté sur la Figure 4.

Le premier compteur 52 est adapté pour interrompre la période du premier compte temporel $C_1$ en cours et pour débuter une nouvelle période du premier compte temporel $C_1$ à chaque réinitialisation, due aux moyens de réinitialisation 58.

Les moyens de mise à disposition 54 sont adaptés pour fournir la consigne de rapport cyclique RC sous la forme d'un signal prenant des valeurs de tension comprises entre la première valeur de tension $V_0$ et la deuxième valeur de tension $V^+$.

Les moyens de génération 56 sont adaptés pour comparer le premier compte temporel $C_1$ et la consigne de rapport cyclique RC, pour conférer au signal numérique cyclique de commande S la valeur logique « 1 » exclusivement lorsque la valeur de tension du premier compte temporel $C_1$ est supérieure à la valeur de tension de la consigne de rapport cyclique RC, et pour conférer au signal numérique cyclique de commande S la valeur logique « 0 » lorsque la valeur de tension du premier compte temporel $C_1$ est inférieure à la valeur de tension de la consigne de rapport cyclique RC.

Plus particulièrement, comme représenté sur la Figure 3, les moyens de mise à disposition 54 comprennent un deuxième compteur 60, pour générer un deuxième compte temporel $C_2$ périodique, des moyens 62 d'extraction d'un rapport cyclique $RC_0$ du signal numérique cyclique intermédiaire E à partir du signal E et du deuxième compte temporel $C_2$, une mémoire tampon 64, pour mémoriser le rapport cyclique extrait $RC_0$, et des moyens 66 de déduction de la consigne de rapport cyclique RC en fonction du rapport cyclique extrait $RC_0$ et du premier compte temporel $C_1$.

Le deuxième compteur 60 est adapté pour générer le deuxième compte temporel $C_2$. De manière analogue au premier compte temporel $C_1$, le deuxième compte temporel $C_2$ est un signal en dents de scie prenant des valeurs en tension comprises entre la première valeur de tension $V_0$ et la deuxième valeur de tension $V^+$. Le deuxième compte temporel $C_2$ prend en particulier la valeur première valeur de tension $V_0$ au début et à la fin de chaque période, prend la deuxième valeur de tension $V^+$ au milieu de chaque période, et croît et décroît sensiblement linéairement entre ces deux extrêmes.

Le deuxième compteur 60 est adapté pour que le deuxième compte temporel $C_2$ soit synchronisé temporellement sur le signal numérique cyclique intermédiaire E, c'est-à-dire que chaque période du deuxième compte temporel $C_2$ correspond à un cycle 45 du signal E. En d'autres termes, le deuxième compteur 60 est adapté pour que chaque période du deuxième compte temporel $C_2$ ait la même durée et débute en même temps que chaque cycle 45 du signal E, comme visible sur la Figure 4.

Les moyens d'extraction 62 sont adaptés pour détecter chaque front montant du signal numérique cyclique intermédiaire E, c'est-à-dire chaque instant où la valeur du signal E passe de la valeur logique « 0 » à la valeur logique « 1 », et pour positionner le rapport cyclique extrait $RC_0$ à la valeur en tension du deuxième compte temporel $C_2$ au moment de la détection du front montant.

La mémoire tampon 64 est adaptée pour mémoriser la valeur du rapport cyclique extrait $RC_0$ à partir de la détection du front montant, jusqu'à la détection du front montant suivant.

Les moyens de déduction 66 sont adaptés pour maintenir la consigne de rapport cyclique RC constante pendant chaque période du premier compte temporel $C_1$, et pour déduire la consigne de rapport cyclique RC comme étant égale à la valeur du rapport cyclique extrait $RC_0$ au début de chaque nouvelle période du premier compte temporel $C_1$. Ainsi, la consigne de rapport cyclique RC est synchronisée sur le premier compte temporel $C_1$, comme représenté sur la Figure 4.

Les moyens de réinitialisation 58 sont propres à réinitialiser le premier compteur 52 à chaque détection d'un changement d'angle du rotor par les moyens de détection 50. A cet effet, les moyens de réinitialisation 58 sont adaptés pour émettre un signal de réinitialisation $\Xi$ à destination du premier compteur 52 à chaque réception d'un signal de détection de changement d'angle $\delta\Theta$.

En variante, les moyens de réinitialisation 58 sont confondus avec les moyens de détection 50, et le signal de détection de changement d'angle $\delta\Theta$ constitue un signal de réinitialisation du premier compteur 52.

Le répartiteur de signal 59 est adapté pour recevoir le signal de détection de changement d'angle $\delta\Theta$ et pour changer le commutateur 30A, 30B, 32A, 32B, 34A, 34B destinataire du signal S à chaque nouvelle détection d'un changement d'angle du rotor du moteur 12.

Un procédé de commande de l'onduleur 18 au moyen du module de commande 20 va maintenant être décrit, en regard de la Figure 4.

Tout d'abord, le module de régulation 42 génère le signal numérique cyclique intermédiaire E en fonction du courant I et de la vitesse angulaire du rotor mesurés, de façon à ce que le rotor suive la consigne de vitesse V reçue par le module de régulation 42. Simultanément, le deuxième compteur 60 génère le deuxième compte temporel $C_2$, qui est synchronisé temporellement avec le signal E.

A chaque front montant du signal E, les moyens d'extraction 62 enregistrent dans la mémoire 64 une valeur du rapport cyclique extrait $RC_0$ égale à la valeur de tension du compte temporel $C_2$ à l'instant du front montant.

Parallèlement, le premier compteur 52 génère le premier compte temporel $C_1$. Initialement, le premier compte temporel $C_1$ est synchronisé temporellement avec le deuxième compte temporel $C_2$ et avec le signal numérique cyclique intermédiaire E.

Au début de chaque nouvelle période du premier compte temporel $C_1$, les moyens de déduction 66 consultent la mémoire 64 et attribuent comme valeur à la consigne de rapport cyclique RC la valeur du rapport cyclique extrait $RC_0$ à l'instant du début de la nouvelle période du premier compte temporel $C_1$. Cette valeur de la consigne de rapport cyclique RC est ensuite maintenue constante jusqu'à la période du premier compte temporel $C_1$ suivante.

Simultanément, les moyens de génération 56 comparent le premier compte temporel $C_1$ avec la consigne de rapport cyclique RC. Lorsque la valeur du premier compte temporel $C_1$ est supérieure à la valeur de la consigne de rapport cyclique RC, les moyens de génération 56 positionnent la valeur du signal numérique cyclique de commande S à la valeur logique « 1 ». Lorsque la valeur du premier compte temporel $C_1$ est inférieure à la valeur de la consigne de rapport cyclique RC, les moyens de génération 56 positionnent la valeur du signal numérique cyclique de commande S à la valeur logique « 0 ».

Enfin, le signal numérique cyclique de commande S est transmis à l'un des commutateurs 30A, 30B, 32A, 32B, 34A, 34B, via le répartiteur de signal 59.

Lorsque les moyens de détection 50 détectent un changement de l'angle Θ du rotor, par exemple un changement de secteur angulaire, à un instant de détection $t_0$, le signal numérique cyclique de commande S est affecté à un autre commutateur 30A, 30B, 32A, 32B, 34A, 34B, en même temps qu'il est synchronisé temporellement sur l'instant de détection $t_0$.

De façon plus détaillée, les moyens de détection 50 génèrent le signal de détection de changement d'angle δΘ, signal qui est transmis aux moyens de réinitialisation 58 et au répartiteur de signal 59.

Lorsque les moyens de réinitialisation 58 reçoivent le signal δΘ, ils réinitialisent le premier compteur 52. La période du premier compte temporel $C_1$ qui était en cours est alors interrompue, et une nouvelle période débute. Il en résulte que le cycle 41 du signal numérique cyclique de commande S qui était en cours est également interrompu et qu'un nouveau cycle 41 débute. Le signal numérique cyclique de commande S se retrouve ainsi synchronisé temporellement sur l'instant de détection $t_0$.

On notera que le premier compte temporel $C_1$ et le signal numérique cyclique de commande S ne sont en conséquence plus synchronisés temporellement avec le signal numérique cyclique intermédiaire E, qui n'a pas été réinitialisé. En effet, tel qu'illustré sur la Figure 4, au-delà de l'instant de détection $t_0$, les débuts des périodes du premier compte temporel $C_1$ et des cycles 41 du signal numérique cyclique de commande S se retrouvent décalés temporellement par rapport aux débuts des cycles 45 du signal numérique cyclique intermédiaire E.

Lorsque le répartiteur de signal 59 reçoit le signal δΘ, il change le commutateur 30A, 30B, 32A, 32B, 34A, 34B auquel est transmis le signal numérique cyclique de commande S selon une règle préprogrammée dans le répartiteur de signal 59 et qui est présentée sur le tableau de la Figure 2.

Ainsi, immédiatement après l'instant de détection $t_0$, le premier compte temporel $C_1$ est à une valeur proche de la première valeur de tension $V_0$, valeur qui

est donc inférieure à la valeur de la consigne de rapport cyclique RC. Il en résulte que le signal numérique cyclique de commande S est positionné à la valeur logique « 0 » immédiatement après l'instant de détection $t_0$, instant qui coïncide avec le transfert du signal S d'un commutateur 30A, 30B, 32A, 32B, 34A, 34B à un autre.

Ce procédé de commande évite ainsi que le signal numérique cyclique de commande S ne soit transféré d'un commutateur 30A, 30B, 32A, 32B, 34A, 34B à un autre alors qu'il prend la valeur logique « 1 ». Or, un tel transfert est un facteur important de génération d'harmoniques parasites par le système 14 d'alimentation du moteur 12. Grâce à l'invention, le système d'alimentation 14 génère donc moins d'harmoniques parasites, ce qui permet de rendre le moteur 12 compatible avec un réseau électrique d'aéronef, en réduisant les harmoniques de tension engendrées par le moteur 12 sur le réseau 24.

Par ailleurs, cette compatibilité du moteur 12 avec un réseau électrique d'aéronef est réalisée sans dégradation des performances du ventilateur 10. En effet, il est possible de choisir n'importe quelle vitesse de rotation du rotor à l'intérieur de la plage des vitesses de rotation du rotor du moteur sans risquer d'occasionner des problèmes de compatibilité électrique. Il est donc notamment possible de choisir les vitesses de rotation permettant d'obtenir les meilleures performances du ventilateur 10.

Enfin, le système d'alimentation 14 est peu coûteux. En effet, il reprend essentiellement des modules d'un système d'alimentation classique, le module de synchronisation 44 ayant simplement été ajouté pour obtenir la synchronisation du signal numérique cyclique de commande S sur chaque instant $t_0$ de changement d'angle du rotor. Il est ainsi possible de synchroniser le signal numérique cyclique de commande sans avoir à reconcevoir toute la logique de commande de l'alimentation du moteur.

**Revendications**

1. Procédé de commande d'un onduleur (18) alimentant électriquement un moteur (12) d'un ventilateur d'aéronef (10), l'onduleur (18) comprenant une pluralité de commutateurs commandés (30A, 30B, 32A, 32B, 34A, 34B) pour la régulation de l'alimentation électrique du moteur (12), le moteur (12) comprenant un rotor et un stator adaptés pour être en rotation relative l'un par rapport à l'autre, le procédé étant **caractérisé en ce qu'**il comprend les étapes suivantes :

   - génération d'un compte temporel ($C_1$) périodique,
   - déduction d'une consigne de rapport cyclique (RC), ladite consigne de rapport cyclique (RC) étant constante pendant chaque période du compte temporel ($C_1$), et étant égale à la valeur d'un rapport cyclique de référence ($RC_0$) au début de chaque nouvelle période du compte temporel ($C_1$),
- génération d'un signal numérique cyclique (S) de commande des commutateurs (30A, 30B, 32A, 32B, 34A, 34B), à une fréquence prédéterminée, le signal numérique cyclique (S) étant déduit par comparaison du compte temporel ($C_1$) avec la consigne de rapport cyclique (RC)
- transmission du signal numérique cyclique de commande (S) à l'un des commutateurs (30A, 30B, 32A, 32B, 34A, 34B) de l'onduleur (18),
- détection d'un changement d'angle du rotor relativement au stator, et
- synchronisation temporelle du signal numérique cyclique de commande (S) sur un instant ($t_0$) de détection du changement d'angle du rotor, ladite étape de synchronisation temporelle comprenant une sous-étape de réinitialisation du compte temporel ($C_1$) lors de la détection du changement d'angle du rotor.

2. Procédé de commande selon la revendication 1, **caractérisé en ce que** le signal numérique cyclique de commande (S) est synchronisé sur l'instant de détection ($t_0$) à chaque nouvelle détection d'un changement de l'angle du rotor.

3. Procédé de commande selon la revendication 1 ou 2, **caractérisé en ce qu'**il comprend une étape supplémentaire d'affectation du signal numérique cyclique de commande (S) à un autre commutateur (30A, 30B, 32A, 32B, 34A, 34B) de l'onduleur (18) lorsqu'un changement de l'angle du rotor est détecté.

4. Procédé de commande selon l'une quelconque des revendications précédentes, **caractérisé en ce que** le moteur (12) comprend une pluralité de secteurs angulaires, et **en ce que** la détection du changement d'angle du rotor se produit à chaque changement de secteur angulaire par l'angle formé entre le rotor et le stator.

5. Ventilateur d'aéronef (10) comprenant un moteur (12) et un système (14) d'alimentation électrique du moteur (12), le moteur (12) comprenant un rotor et un stator montés rotatifs l'un par rapport à l'autre, et le système d'alimentation (14) comprenant :

    - un onduleur (18), comprenant une pluralité de commutateurs commandés (30A, 30B, 32A, 32B, 34A, 34B) pour la régulation de l'alimentation électrique du moteur (12),
    - un module (20) de commande de l'onduleur (18), et
    - un capteur (22) de l'angle du rotor relativement au stator,

le module de commande (20) comprenant des moyens (56) de génération d'un signal numérique cyclique (S) de commande des commutateurs (30A, 30B, 32A, 32B, 34A, 34B), à une fréquence prédéterminée, et des moyens (59) de transmission dudit signal numérique cyclique de commande (S) sélectivement à au moins un des commutateurs (30A, 30B, 32A, 32B, 34A, 34B), le module de commande (20) comprenant en outre des moyens (50) de détection d'un changement d'angle du rotor relativement au stator, **caractérisé en ce que** le module de commande (20) comprend encore :

    - un module (44) de synchronisation temporelle du signal numérique cyclique de commande (S) sur un instant ($t_0$) de détection du changement d'angle du rotor,
    - un compteur (52), pour générer un compte temporel ($C_1$) périodique,
    - des moyens (58) de réinitialisation du compteur (52), pour réinitialiser le compteur (52) lors d'une détection d'un changement d'angle du rotor, et
    - des moyens (66) de déduction d'une consigne de rapport cyclique (RC), adaptés pour maintenir la consigne de rapport cyclique (RC) constante pendant chaque période du compte temporel ($C_1$), et pour déduire la consigne de rapport de cyclique (RC) comme étant égale à la valeur d'un rapport cyclique de référence ($RC_0$) au début de chaque nouvelle période du compte temporel ($C_1$),

les moyens de génération (56) étant adaptés pour générer le signal numérique cyclique de commande (S) à partir du compte temporel ($C_1$) et de la consigne de rapport cyclique (RC).

6. Ventilateur d'aéronef (10) selon la revendication 5, **caractérisé en ce que** le module de synchronisation (44) est adapté pour synchroniser temporellement le signal numérique cyclique de commande (S) à chaque nouvelle détection d'un changement de l'angle du rotor.

7. Ventilateur d'aéronef (10) selon la revendication 5 ou 6, **caractérisé en ce que** les moyens de transmission (59) sont adaptés pour transmettre le signal numérique cyclique de commande (S) à un autre commutateur (30A, 30B, 32A, 32B, 34A, 34B) de l'onduleur (18) lorsqu'un changement de l'angle du rotor est détecté.

8. Ventilateur d'aéronef (10) selon l'une quelconque des revendications 5 à 7, **caractérisé en ce que** le capteur (22) est adapté pour identifier un secteur angulaire du moteur (12) dans lequel est localisé l'angle formé entre le rotor et le stator, et **en ce que** les moyens de détection (50) sont adaptés pour détecter un changement dudit angle lorsque celui-ci change de secteur angulaire.

9. Aéronef comprenant un ventilateur (10), **caractérisé en ce que** le ventilateur (10) est un ventilateur d'aéronef selon l'une quelconque des revendications 5 à 8.

**Patentansprüche**

1. Verfahren zum Steuern eines Wechselrichters (18), der elektrisch einen Motor (12) eines Luftfahrzeuggebläses (10) versorgt, wobei der Wechselrichter (18) eine Mehrzahl von gesteuerten Schaltern (30A, 30B, 32A, 32B, 34A, 34B) für die Regelung der elektrischen Versorgung des Motors (12) aufweist, wobei der Motor (12) einen Rotor und einen Stator aufweist, die eingerichtet sind, sich in Rotation relativ zueinander zu befinden, wobei das Verfahren dadurch charakterisiert ist, dass es die folgenden Schritte aufweist:

   - Erzeugung eines periodischen zeitlichen Zählwerts ($C_1$),
   - Ableiten eines Sollwerts des zyklischen Verhältnisses (RC), wobei der Sollwert des zyklischen Verhältnisses (RC) während jeder Periode des zeitlichen Zählwerts ($C_1$) konstant ist und am Anfang von jeder neuen Periode des zeitlichen Zählwerts ($C_1$) gleich dem Wert einer Referenz des zyklischen Verhältnisses ($RC_0$) ist,
   - Erzeugung eines digitalen zyklischen Signals (S) zum Steuern der Schalter (30A, 30B, 32A, 32B, 34A, 34B) mit einer vorgegebenen Frequenz, wobei das digitale zyklische Signal (S) durch Vergleich des zeitlichen Zählwerts ($C_1$) mit dem Sollwert des zyklischen Verhältnisses (RC) abgeleitet wird,
   - Übertragung des digitalen zyklischen Signals zum Steuern (S) an einen der Schalter (30A, 30B, 32A, 32B, 34A, 34B) des Wechselrichters (18),
   - Detektion einer Änderung des Winkels des Rotors relativ zum Stator und
   - zeitliche Synchronisation des digitalen zyklischen Signals zum Steuern (S) auf einen Moment ($t_0$) der Detektion der Änderung des Winkels des Rotors, wobei der Schritt der zeitlichen Synchronisation einen Unterschritt der Re-Initialisierung des zeitlichen Zählwerts ($C_1$) bei der Detektion der Änderung des Winkels des Rotors aufweist.

2. Verfahren zum Steuern gemäß Anspruch 1, dadurch charakterisiert, dass das digitale zyklische Signal zum Steuern (S) auf den Detektionsmoment ($t_0$) bei jeder neuen Detektion einer Änderung des Winkels des Rotors synchronisiert wird.

3. Verfahren zum Steuern gemäß dem Anspruch 1 oder 2, dadurch charakterisiert, dass es einen zusätzlichen Schritt der Anwendung des digitalen zyklischen Signals zum Steuern (S) auf einen anderen Schalter (30A, 30B, 32A, 32B, 34A, 34B) des Wechselrichters (18) aufweist, wenn eine Änderung des Winkels des Rotors detektiert wird.

4. Verfahren zum Steuern gemäß einem der vorhergehenden Ansprüche, dadurch charakterisiert, dass der Motor (12) eine Mehrzahl von Winkelsektoren aufweist und dadurch, dass die Detektion der Änderung des Winkels des Rotors bei jeder Änderung des Winkelsektors durch den zwischen dem Rotor und dem Stator gebildeten Winkel erfolgt.

5. Luftfahrzeuggebläse (10) aufweisend einen Motor (12) und ein System (14) zur elektrischen Versorgung des Motors (12), wobei der Motor (12) einen Rotor und einen Stator aufweist, die drehbar relativ zueinander installiert sind und das System zur Versorgung (14) aufweist:

   - einen Wechselrichter (18), der eine Mehrzahl von gesteuerten Schaltern (30A, 30B, 32A, 32B, 34A, 34B) für die Regelung der elektrischen Versorgung des Motors (12) aufweist,
   - ein Modul (20) zum Steuern des Wechselrichters (18) und
   - einen Sensor (22) des Winkels des Rotors relativ zum Stator,

   wobei das Steuermodul (20) Mittel (56) zur Erzeugung eines digitalen zyklischen Signals (S) zum Steuern der Schalter (30A, 30B, 32A, 32B, 34A, 34B) mit einer vorgegebenen Frequenz und Mittel (59) zur Übertragung des digitalen zyklischen Signals zum Steuern (S) selektiv an mindestens einen Schalter (30A, 30B, 32A, 32B, 34A, 34B) aufweist, wobei das Modul zum Steuern (20) außerdem Mittel (50) zur Detektion einer Änderung des Winkels des Rotors relativ zu dem Stator aufweist, dadurch charakterisiert, dass das Modul zum Steuern (20) noch aufweist:

   - ein Modul (44) zur zeitlichen Synchronisation des digitalen zyklischen Signals zum Steuern (S) auf einen Moment ($t_0$) der Detektion der Änderung des Winkels des Rotors,
   - einen Zähler (52) zum Erzeugen eines periodischen zeitlichen Zählwerts ($C_1$),
   - Mittel (58) zur Re-Initialisierung des Zählers (52), um den Zähler (52) bei bei der Detektion der Änderung des Winkels des Rotors zu reinitialisieren, und
   - Mittel zum Ableiten (66) eines Sollwerts des zyklischen Verhältnisses (RC), dazu eingerichtet, den Sollwert des zyklischen Verhältnisses (RC) während jeder Periode des zeitlichen Zählwerts ($C_1$) konstant zu halten und den Sollwert des zyklischen Verhältnisses (RC) derart abzuleiten, dass er am Anfang von jeder neuen Periode des zeitlichen Zählwerts ($C_1$) gleich dem Wert einer Referenz des zyklischen Verhältnisses ($RC_0$) ist,

wobei die Mittel zur Erzeugung (56) eingerichtet sind, das digitale zyklische Signal zum Steuern (S) ausgehend von dem zeitlichen Zählwert ($C_1$) und dem Sollwert des zyklischen Verhältnisses zu erzeugen.

**6.** Luftfahrzeuggebläse (10) gemäß Anspruch 5, dadurch charakterisiert, dass das Modul zur Synchronisation (44) eingerichtet ist, das digitale zyklische Signal zum Steuern (S) bei jeder neuen Detektion einer Änderung des Winkels des Rotors zu synchronisieren.

**7.** Luftfahrzeuggebläse (10) gemäß Anspruch 5 oder 6, dadurch charakterisiert, dass die Mittel zur Übertragung (59) eingerichtet sind, das digitale zyklische Signal zum Steuern (S) an einen anderen Schalter (30A, 30B, 32A, 32B, 34A, 34B) des Wechselrichters (18) zu übermitteln, wenn eine Änderung des Winkels des Rotors detektiert wird.

**8.** Luftfahrzeuggebläse (10) gemäß einem der Ansprüche 5 bis 7, dadurch charakterisiert, dass der Sensor (22) zum Identifizieren eines Winkelsektors des Motors (12), indem sich der durch den zwischen dem Rotor und dem Stator gebildete Winkel befindet, eingerichtet ist und dadurch, dass die Mittel zur Detektion (50) dazu eingerichtet sind, eine Änderung des Winkels zu detektieren, wenn dieser den Winkelsektor wechselt.

**9.** Luftfahrzeug aufweisend ein Gebläse (10), dadurch charakterisiert, dass das Gebläse (10) ein Luftfahrzeuggebläse gemäß einem der Ansprüche 5 bis 8 ist.

**Claims**

**1.** Method for controlling an inverter (18) supplying power to a motor (12) of an aircraft fan (10), the inverter (18) comprising a plurality of controlled switches (30A, 30B, 32A, 32B, 34A, 34B) for regulating the power supply to the motor (12), the motor (12) comprising a rotor and a stator which are adapted to be in rotation relative to one another, the method being **characterised in that** it comprises the following steps:

- generating a periodic time count ($C_1$),
- deriving a duty cycle (RC) setpoint, said duty cycle (RC) setpoint being constant during each period of the time count ($C_1$) and being equal to the value of a reference duty cycle ($RC_0$) at the start of each new period of the time count ($C_1$),
- generating a cyclic digital signal (S) for controlling the switches (30A, 30B, 32A, 32B, 34A, 34B), at a predetermined frequency, the cyclic digital signal (S) being derived by comparing the time count ($C_1$) with the duty cycle (RC) setpoint,
- transmitting the cyclic digital control signal (S) to one of the switches (30A, 30B, 32A, 32B, 34A, 34B) of the inverter (18),
- detecting a change in angle of the rotor relative to the stator, and
- temporally synchronising the cyclic digital control signal (S) with a time (to) of detection of the change in angle of the rotor, said temporal synchronisation step comprising a sub-step of reinitialising the time count ($C_1$) when the change in angle of the rotor is detected.

**2.** Control method according to claim 1, **characterised in that** the cyclic digital control signal (S) is synchronised with the time of detection ($t_0$) each time a change in the angle of the rotor is detected.

**3.** Control method according to claim 1 or 2, **characterised in that** it comprises an additional step of assigning the cyclic digital control signal (S) to a different switch (30A, 30B, 32A, 32B, 34A, 34B) of the inverter (18) when a change in the angle of the rotor is detected.

**4.** Control method according to any one of the preceding claims, **characterised in that** the motor (12) comprises a plurality of angular sectors, and **in that** the detection of the change in angle of the rotor takes place at each change of angular sector by the angle formed between the rotor and the stator.

**5.** Aircraft fan (10) comprising a motor (12) and a system (14) for supplying power to the motor (12), the motor (12) comprising a rotor and a stator which are rotatably mounted relative to one another, and the power supply system (14) comprising:

   - an inverter (18) comprising a plurality of controlled switches (30A, 30B, 32A, 32B, 34A, 34B) for regulating the power supply to the motor (12),
   - a module (20) for controlling the inverter (18), and
   - a sensor (22) of the angle of the rotor relative to the stator,

the control module (20) comprising means (56) for generating a cyclic digital signal (S) for controlling the switches (30A, 30B, 32A, 32B, 34A, 34B), at a predetermined frequency, and means (59) for transmitting said cyclic digital control signal (S) selectively to at least one of the switches (30A, 30B, 32A, 32B, 34A, 34B), the control module (20) further comprising means (50) for detecting a change in angle of the rotor relative to the stator, **characterised in that** the control module (20) also comprises:

    - a module (44) for temporally synchronising the cyclic digital control signal (S) with a time (to) of detection of the change in angle of the rotor,
    - a counter (52) for generating a periodic time count $(C_1)$,
    - means (58) for reinitialising the counter (52), in order to reinitialise the counter (52) when a change in angle of the rotor is detected, and
    - means (66) for deriving a duty cycle (RC) setpoint, which means are adapted to keep the duty cycle (RC) setpoint constant during each period of the time count $(C_1)$, and to derive the duty cycle (RC) setpoint as being equal to the value of a reference duty cycle $(RC_0)$ at the start of each new period of the time count $(C_1)$,

the generating means (56) being adapted to generate the cyclic digital control signal (S) from the time count $(C_1)$ and the duty cycle (RC) setpoint.

6. Aircraft fan (10) according to claim 5, **characterised in that** the synchronisation module (44) is adapted to temporally synchronise the cyclic digital control signal (S) each time a change in the angle of the rotor is detected.

7. Aircraft fan (10) according to claim 5 or 6, **characterised in that** the transmission means (59) are adapted to transmit the cyclic digital control signal (S) to a different switch (30A, 30B, 32A, 32B, 34A, 34B) of the inverter (18) when a change in the angle of the rotor is detected.

8. Aircraft fan (10) according to any one of claims 5 to 7, **characterised in that** the sensor (22) is adapted to identify an angular sector of the motor (12) in which the angle formed between the rotor and the stator is located, and **in that** the detection means (50) are adapted to detect a change in said angle when the angle changes angular sector.

9. Aircraft comprising a fan (10), **characterised in that** the fan (10) is an aircraft fan according to any one of claims 5 to 8.

FIG.1

| Secteur angulaire | Signal reçu | | | | | |
|---|---|---|---|---|---|---|
| | 30A | 32A | 34A | 30B | 32B | 34B |
| 1 | '0' | '1' | '0' | S | '0' | '0' |
| 2 | '0' | '0' | S | '1' | '0' | '0' |
| 3 | '0' | '0' | '1' | '0' | S | '0' |
| 4 | S | '0' | '0' | '0' | '1' | '0' |
| 5 | '1' | '0' | '0' | '0' | '0' | S |
| 6 | '0' | S | '0' | '0' | '0' | '1' |

## FIG.2

EP 2 605 400 B1

FIG.3

EP 2 605 400 B1

FIG.4

14

**EP 2 605 400 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2003062863 A1, HUANG BIING-HUANG [TW]